(19) Europäisches Patentamt
European Patent Office
Office européen des brevets

(11) Veröffentlichungsnummer: **0 399 199 B1**

(12) **EUROPÄISCHE PATENTSCHRIFT**

(45) Veröffentlichungstag der Patentschrift: **27.07.94**

(51) Int. Cl.⁵: **C08G 77/54**

(21) Anmeldenummer: **90107012.8**

(22) Anmeldetag: **12.04.90**

# (54) Isocyanurathaltige Organosiliciumverbindungen.

(30) Priorität: **27.04.89 DE 3913980**

(43) Veröffentlichungstag der Anmeldung:
**28.11.90 Patentblatt 90/48**

(45) Bekanntmachung des Hinweises auf die Patenterteilung:
**27.07.94 Patentblatt 94/30**

(84) Benannte Vertragsstaaten:
**AT CH DE FR GB IT LI NL**

(56) Entgegenhaltungen:
**EP-A- 0 261 517**
**DE-A- 2 421 038**
**US-A- 3 813 364**
**US-A- 4 374 986**

(73) Patentinhaber: **SIEMENS AKTIENGESELLSCHAFT**
**Wittelsbacherplatz 2**
**D-80333 München(DE)**

(72) Erfinder: **Stapp, Bernard, Dr.**
**Am Grubfeld 1**
**D-8501 Kalchreuth(DE)**
Erfinder: **Markert, Helmut, Dr.**
**Lohengrinstrasse 17**
**D-8500 Nürnberg 40(DE)**
Erfinder: **Schön, Lothar, Dipl.-Ing. (FH)**
**Klosteräckerweg 33**
**D-8524 Neunkirchen a. B.(DE)**

EP 0 399 199 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue isocyanurathaltige Organosiliciumverbindungen sowie deren Herstellung.

Insbesondere betrifft die Erfindung isocyanurathaltige Organosiliciumverbindungen der allgemeinen Formel

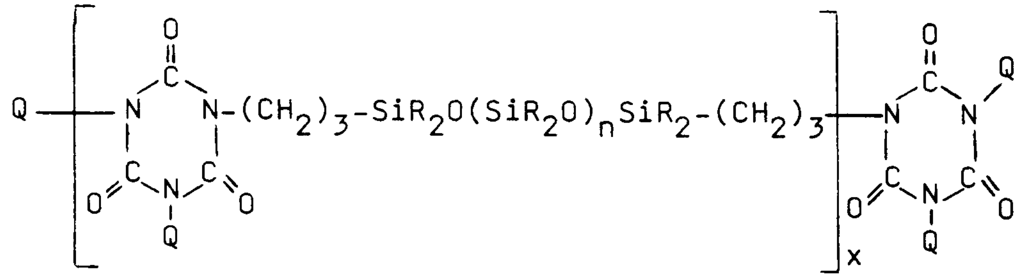

,

worin Q = $-(CH_2)_3SiR_2O(SiR_2O)_nSiR_2R'$, n eine ganze Zahl von 0 bis 25 und x eine ganze Zahl von 0 bis 10 ist und für die Reste R und R', die jeweils gleich oder verschieden sein können, folgendes gilt:

R = Alkyl, Cycloalkyl, Aryl, Aralkyl oder Alkaryl, und

R' = ein epoxyfunktioneller Rest mit 4 bis 10 C-Atomen oder ein (meth)acrylatfunktioneller Rest mit mindestens 6 C-Atomen.

Die Reste R stellen Alkyl-, Cycloalkyl-, Aryl-, Aralkyl- oder Alkarylgruppen dar, wobei diese Gruppen unsubstituiert oder substituiert sein können. Beispielhaft seien für die Reste R folgende Gruppen genannt:

- Alkyl mit 1 bis 4 C-Atomen, wie Methyl, Ethyl, Propyl, Isopropyl, Butyl und Isobutyl, wobei der Methylrest bevorzugt ist;
- Cycloalkyl mit 5 bis 8 C-Atomen, wie Cyclohexyl, Methylcyclohexyl und Cycloheptyl;
- Aryl mit 6 bis 10 C-Atomen, wie Phenyl und Naphthyl;
- Aralkyl, wie β-Phenylethyl, β-Phenylpropyl, o-Methylphenylethyl, 3.5-Dimethylphenylethyl, p-Nonylphenylethyl, o-Bromphenylethyl, 3.5-Dibromphenylethyl, p-Chlorphenylethyl und 3.5-Dichlorphenylethyl;
- Alkaryl, wie Tolyl.

Die epoxyfunktionellen Reste R' weisen 4 bis 10 C-Atome auf, wobei die Epoxidgruppe über eine Kohlenstoffbrücke, die auch Heteroatome enthalten kann, an die Siloxankette gebunden ist. Diese Reste R' leiten sich von vinyl- oder allylfunktionellen Epoxiden in der Weise ab, daß die Vinyl- bzw. Allylfunktion an eine Si-H-Funktion addiert ist. Beispielhaft seien als vinyl- bzw. allylfunktionelle Epoxide folgende Verbindungen genannt: Allylglycidylether, 4-Vinylcyclohexenoxid, 4-Vinylnorbornenoxid und 1.2-Epoxy-3-buten.

Die (meth)acrylatfunktionellen Reste R', bei denen die (Meth)acrylatgruppe ebenfalls über eine Kohlenstoffbrücke an die Siloxankette gebunden ist, können sich von den epoxyfunktionellen Resten ableiten, und zwar in der Weise, daß der Epoxidring mittels (Meth)acrylsäure geöffnet ist. In diesem Fall weisen die (meth)acrylatfunktionellen Reste 7 bis 14 C-Atome auf. Die (Meth)acrylatgruppe der (meth)-acrylatfunktionellen Reste R' kann aber auch esterartig oder über eine Carbonat- oder Urethangruppierung an eine Kohlenstoffbrücke zur Siloxankette gebunden sein.

Bevorzugt sind dabei Organosiliciumverbindungen folgender Art:

- Verbindungen, bei denen die Reste R' epoxyfunktionelle Reste sind, die sich von folgenden ungesättigten Epoxiden ableiten: 1.2-Epoxy-3-buten, 1.2-Epoxy-5-hexen, 1.2-Epoxy-7-octen, Allylglycidylether, 4-Vinylcyclohexenoxid, 4-Vinylnorbornenoxid, Norbornadienoxid, Limonenoxid und Dicyclopentadienoxid;
- Verbindungen, bei denen die Reste R' (meth)acrylatfunktionelle Reste sind, erzeugt durch Ringöffnung des Epoxidrestes von Verbindungen der vorstehend genannten Art mit (Meth)acrylsäure;
- Verbindungen, bei denen die Reste R' (meth)acrylatfunktionelle Reste sind, die esterartig oder über eine Carbonat- oder Urethangruppierung an eine Kohlenstoffbrücke zur Siloxankette gebunden sind.

Die erfindungsgemäßen Verbindungen sind neue polymerisierbare, isocyanurathaltige Organosiliciumverbindungen, die Epoxy- und/oder (Meth)acrylatfunktionen aufweisen. Durch die Erfindung werden somit flüssige Prepolymere geschaffen, in deren chemischen Aufbau steife Strukturelemente und flexible Strukturelemente vereint sind, und die reaktive Gruppen aufweisen, über die eine Polymerisation (der Prepolymeren) erfolgen kann.

Aus der US-PS 3 821 218 sind siliciumorganische Isocyanurate, wie 1.3.5-Tris(trialkoxysilylpropyl)-isocyanurat, bekannt. Diese Verbindungen, die als Haftvermittler verwendet werden können, entstehen durch Trimerisierung der entsprechenden Silylorganoisocyanate. Die Isocyanate wiederum werden durch

Umsetzung von Silylorganohaliden mit Metallcyanaten, wie Kaliumcyanat, hergestellt.

Aus der DE-OS 24 21 038 sind thermisch härtbare Zusammensetzungen bekannt, die im wesentlichen aus (a) einer Siliciumwasserstoffverbindung mit mindestens zwei an das Siliciumatom gebundenen Wasserstoffatomen und (b) wenigstens einer Isocyanursäureverbindung in Form eines Trialkenylisocyanurats oder eines Derivates davon bestehen. Diese Zusammensetzungen können ferner einen Additionspolymerisationskatalysator oder einen derartigen Katalysator und einen Radikalpolymerisationskatalysator enthalten. Die Komponenten (a) und (b) werden gewöhnlich in einem im wesentlichen äquimolaren Verhältnis gemischt und gehärtet. Bei der Härtung entstehen Produkte mit guter thermischer Beständigkeit, mechanischer Festigkeit und Klebeeigenschaft.

Aus der DE-OS 36 31 125 ist ein Verfahren zur Herstellung von Organopolysiloxanelastomeren durch Vernetzen von durch Anlagerung von Si-gebundenem Wasserstoff an SiC-gebundene Vinylgruppen vernetzbaren Massen bekannt. Die Massen enthalten einen Zusatz zur Verbesserung der Haftung der Elastomeren auf den Unterlagen, auf denen sie erzeugt werden. Dieser Zusatz kann unter anderem eine Organosiliciumverbindung sein, die durch Hydrosilylierung von Triallylisocyanurat mit einem Organosiloxan der Formel $HSi(CH_3)_2[OSi(CH_3)_2]_nH$, worin n eine ganze Zahl im Wert von 1 bis 5 ist, erhalten wird. Dabei entstehen isocyanurathaltige Organosiliciumverbindungen, bei denen jeder Isocyanuratstickstoff über eine $(CH_2)_3$-Gruppierung an eine Si-H-funktionelle Polysiloxankette gebunden ist, insbesondere $-Si(CH_3)_2OSi(CH_3)_2H$.

Die isocyanurathaltigen Organosiliciumverbindungen nach der Erfindung können auf verschiedene Weise hergestellt werden. Bei einer Methode werden in einer ersten Verfahrensstufe epoxyfunktionelle oder hydroxyfunktionelle Organosiliciumverbindungen hergestellt, und zwar durch Umsetzung ungesättigter Epoxide (mit 4 bis 10 Kohlenstoffatomen) bzw. ungesättigter Alkohole (mit 3 bis 5 Kohlenstoffatomen) mit Organosiliciumverbindungen der Struktur $HSiR_2O(SiR_2O)_nSiR_2H$, d.h. mit Verbindungen, welche zwei endständige Si-H-Bindungen aufweisen. Bei dieser sogenannten Hydrosilylierungsreaktion beträgt das Molverhältnis von Organosiliciumverbindung zu Epoxid bzw. Alkohol im allgemeinen 1:1 bis 1,2:1, so daß das Reaktionsprodukt im Mittel eine Si-H-Funktion aufweist.

Als ungesättigte Epoxide dienen die vorstehend genannten Verbindungen, insbesondere Allylglycidylether; als ungesättigte Alkohole können folgende Verbindungen eingesetzt werden: Allylalkohol, 2-Methyl-2-propen-1-ol, 3-Methyl-3-buten-1-ol, 1-Buten-3-ol, 2-Methyl-3-buten-2-ol und 3-Methyl-2-buten-1-ol, wobei Allylalkohol bevorzugt wird. Die Hydrosilylierung der ungesättigten Epoxide und Alkohole erfolgt in an sich bekannter Weise (siehe dazu: US-PS 834 326, US-PS 4 293 678 und DE-OS 33 16 166 sowie "J. Amer. Chem. Soc.", Vol. 81 (1959), Seiten 2632 ff., bzw. EP-OS 0 159 729, US-PS 2 970 150 und DE-OS 32 22 839). Dabei werden die Ausgangskomponenten, im allgemeinen bei erhöhter Temperatur, in Gegenwart eines Katalysators miteinander zur Reaktion gebracht; geeignete Katalysatoren sind Metalle der 8. Nebengruppe des Periodensystems bzw. entsprechende Metallverbindungen. Eine typische Hydrosilylierungsreaktion verläuft beispielsweise bei ca. 100 °C in Toluol als Lösungsmittel mit Hexachloroplatinsäure ($H_2PtCl_6.6 H_2O$) als Katalysator.

Die epoxyfunktionellen bzw. hydroxyfunktionellen Organosiliciumverbindungen der vorstehend genannten Art werden dann in einer zweiten Verfahrensstufe mit Triallyl-1.3.5-triazin-2.4.6-trion (Triallylisocyanurat) umgesetzt. Die Umsetzung, d.h. die Hydrosilylierung, wird dabei in der Weise durchgeführt, daß auf die Allylfunktionen mindestens äquimolare Mengen an Si-H-Funktionen entfallen.

Die Hydrosilylierung selbst erfolgt in einem inerten Lösungsmittel, wie Dioxan, Tetrahydrofuran oder Toluol, bevorzugt bei Atmosphärendruck und Temperaturen von 80 bis 120 °C, in Gegenwart eines Edelmetallkatalysators. Als Katalysator kommt beispielsweise mit Platin belegtes Aluminiumoxid, Hexachloroplatinsäure oder ein Platin/Vinylsiloxan-Komplex in Frage. Die Menge an eingesetztem Katalysator richtet sich dabei nach der Art des Katalysators und der Reaktionstemperatur.

Während die in der zweiten Verfahrensstufe hergestellten epoxyfunktionellen isocyanurathaltigen Organosiliciumverbindungen (1a) bereits erfindungsgemäße Verbindungen darstellen, müssen die entsprechenden hydroxyfunktionellen isocyanurathaltigen Siliciumverbindungen (2a) erst noch in erfindungsgemäße Verbindungen übergeführt werden. Dies erfolgt dadurch, daß die hydroxyfunktionellen Verbindungen mit einem monofunktionellen (Meth)acrylsäurederivat zur Reaktion gebracht werden, und zwar in der Weise, daß die Hydroxylgruppen wenigstens teilweise umgesetzt werden. Dabei resultieren (meth)-acrylatfunktionelle isocyanurathaltige Organosiliciumverbindungen (3a), bei denen die (Meth)-acrylatfunktionen teilweise durch Hydroxylfunktionen ersetzt sein können. In entsprechender Weise können die hydroxyfunktionellen Verbindungen mit Epichlorhydrin in epoxyfunktionelle isocyanurathaltige Organosiliciumverbindungen (4a) übergeführt werden, wobei die Epoxidfunktionen ebenfalls teilweise durch Hydroxylfunktionen ersetzt sein können.

Auch die epoxyfunktionellen isocyanurathaltigen Organosiliciumverbindungen (1a) können in (meth)-acrylatfunktionelle isocyanurathaltige Organosiliciumverbindungen (5a) umgewandelt werden. Dazu werden

die epoxyfunktionellen Verbindungen in der Weise mit (Meth)acrylsäure zur Reaktion gebracht, daß die Epoxidfunktionen ganz oder teilweise in (Meth)acrylatfunktionen übergeführt werden. Die Menge an (Meth)-acrylsäure kann deshalb zwischen 0,5 und 5 mol betragen, bezogen auf 1 mol Epoxid.

Bei der vorstehend genannten Umsetzung erfolgt eine Öffnung des Epoxidringes durch die Carbonsäure, wobei eine sekundäre Hydroxylgruppe entsteht (siehe dazu: US-PS 4 293 678 und US-PS 4 558 082). Die Reaktion wird in inerten Lösungsmitteln, wie Toluol, bei Temperaturen zwischen 25 und 120 °C (bei Atmosphärendruck), bevorzugt bei ca. 100 °C, in Gegenwart eines basischen Katalysators, insbesondere eines aminischen Katalysators, durchgeführt. Geeignete Katalysatoren sind beispielsweise Benzyltrimethylammoniumchlorid, Benzyldimethylamin, Dimethylanilin oder 1.4-Diazabicyclo[2.2.2]octan, die in einer Menge von 0,1 bis 2 Masse-% eingesetzt werden, bezogen auf die epoxyfunktionelle Verbindung.

Bei einer anderen Methode zur Herstellung der erfindungsgemäßen isocyanurathaltigen Organosiliciumverbindungen wird in einer ersten Verfahrensstufe Triallyl-1.3.5-triazin-2.4.6-trion mit einer Organosiliciumverbindung der Struktur $HSiR_2O(SiR_2O)_nSiR_2H$ im Molverhältnis von 1,1:1 bis 2:1 zu einer allylfunktionellen isocyanurathaltigen Organosiliciumverbindung umgesetzt. Die Reaktion erfolgt dabei in an sich bekannter Weise in Lösung und in Gegenwart eines Edelmetallkatalysators der vorstehend genannten Art (siehe dazu: DE-OS 24 21 038).

In diesem Zusammenhang sei auch darauf hingewiesen, daß es möglich ist, den Organosiloxananteil der allylfunktionellen Verbindungen zu modifizieren. Dazu werden die allylfunktionellen Verbindungen in üblicher Weise - sauer oder alkalisch - mit anderen Organosiloxanen äquilibriert, beispielsweise mit Octamethylcyclotetrasiloxan.

Die allylfunktionellen isocyanurathaltigen Organosiliciumverbindungen der vorstehend genannten Art werden in einer zweiten Verfahrensstufe mit einer epoxyfunktionellen oder einer hydroxyfunktionellen Organosiliciumverbindung umgesetzt, die - in der beschriebenen Weise - aus einem ungesättigten Epoxid (mit 4 bis 10 Kohlenstoffatomen) bzw. einem ungesättigten Alkohol (mit 3 bis 5 Kohlenstoffatomen) und einer Organosiliciumverbindung der Struktur $HSiR_2O(SiR_2O)_nSiR_2H$ erhalten wird. Die Reaktion wird dabei in der angegebenen Weise durchgeführt, wobei die Mengen an den Ausgangskomponenten derart gewählt werden, daß auf die Allylfunktionen mindestens äquimolare Mengen an Si-H-Funktionen entfallen.

Während die in der zweiten Verfahrensstufe hergestellten epoxyfunktionellen isocyanurathaltigen Organosiliciumverbindungen (1b) wiederum bereits erfindungsgemäße Verbindungen darstellen, müssen die entsprechenden hydroxyfunktionellen isocyanurathaltigen Organosiliciumverbindungen (2b) erneut erst noch in erfindungsgemäße Verbindungen übergeführt werden. Dies erfolgt - in der angegebenen Weise - durch Reaktion mit einem monofunktionellen (Meth)acrylsäurederivat oder mit Epichlorhydrin, wobei die Hydroxylgruppen wenigstens teilweise umgesetzt werden, so daß (meth)acrylatfunktionelle isocyanurathaltige Organosiliciumverbindungen (3b) bzw. entsprechende epoxyfunktionelle Verbindungen (4b) resultieren, bei denen die funktionellen Gruppen teilweise durch Hydroxylfunktionen ersetzt sein können.

Als monofunktionelle (Meth)acrylsäurederivate können folgende Verbindungen dienen:

- (Meth)acrylsäurechlorid:
  Die Reaktion erfolgt unter Zugabe eines aminischen Säurefängers und Abtrennung des gebildeten Aminhydrochlorids;
  die (Meth)acrylatfunktionen sind in den Endprodukten esterartig gebunden.
- (Meth)acrylsäureester:
  Beispielhaft seien Methyl(meth)acrylat, Ethyl(meth)acrylat, n-Propyl(meth)acrylat und n-Butyl(meth)-acrylat genannt.
  Die Reaktion erfolgt unter destillativer Entfernung des bei der Umesterung anfallenden Alkohols;
  die (Meth)acrylatfunktionen sind in den Endprodukten esterartig gebunden.
- Chlorkohlensäureester hydroxyfunktioneller (Meth)acrylate:
  Dies sind Verbindungen der allgemeinen Formel

$$Cl-\underset{\underset{O}{\parallel}}{C}-O-R^{*}-O-\underset{\underset{O}{\parallel}}{C}-\underset{\underset{H(CH_3)}{|}}{C}=CH_2 \quad .$$

  Als hydroxyfunktionelle (Meth)acrylate, d.h. ungesättigte Alkohole, können dabei auch mehrfache (Meth)acrylsäureester von Pentaerythrit, Trimethylolethan, Trimethylolpropan und Glycerin sowie deren Dimeren dienen.
  Die Reaktion erfolgt unter Zugabe eines aminischen Säurefängers und Abtrennung des gebildeten Aminhydrochlorids;

die (Meth)acrylatfunktionen sind in den Endprodukten über Carbonatgruppierungen gebunden.

- Isocyanatfunktionelle (Meth)acrylate:
  Dies sind Verbindungen der allgemeinen Formel

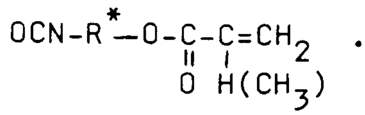

Bevorzugt werden dabei Addukte von hydroxyfunktionellen (Meth)acrylaten an Diisocyanate eingesetzt, wobei die Addukte im Mittel je eine Isocyanat- und (Meth)acrylatfunktion aufweisen.
Als Diisocyanate dienen vorzugsweise 2.4-Toluylendiisocyanat und Isophorondiisocyanat;
geeignete hydroxyfunktionelle (Meth)acrylate sind Hydroxyethyl-, Hydroxypropyl- und Hydroxybutyl-(meth)acrylat sowie Caprolactonacrylat, Trimethylolpropan-di(meth)acrylat, Glycerin-di(meth)acrylat und Pentaerythrit-tri(meth)acrylat. Die (Meth)acrylatfunktionen sind in den Endprodukten über Urethangruppierungen gebunden.

Auch die vorstehend beschriebenen epoxyfunktionellen isocyanurathaltigen Organosiliciumverbindungen (1b) können in (meth)acrylatfunktionelle isocyanurathaltige Organosiliciumverbindungen (5b) umgewandelt werden, was - in der bereits angegebenen Weise - durch Umsetzung mit (Meth)acrylsäure erfolgt. Die Epoxidfunktionen können dabei wiederum ganz oder teilweise in (Meth)acrylatfunktionen übergeführt werden.

Anhand von Ausführungsbeispielen soll die Erfindung noch näher erläutert werden.

Beispiel 1:

Herstellung einer Organosiliciumverbindung der Struktur

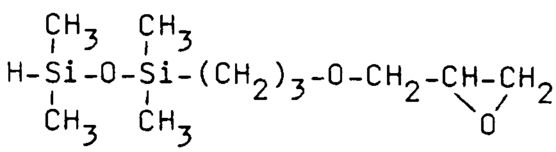

In einen mit Rückflußkühler, Rührer, Innenthermometer und Tropftrichter versehenen 1000 ml-Rundkolben werden 67,1 g 1.1.3.3-Tetramethyldisiloxan (0,5 mol), 300 ml Toluol und 5 ml einer 0,01 molaren Lösung von Hexachloroplatinsäure in Tetrahydrofuran gegeben. Dazu wird bei 95 °C unter Rühren innerhalb von 10 h eine Mischung von 57 g Allylglycidylether (0,5 mol) und 50 ml Toluol getropft. Nach 14stündigem Kochen am Rückfluß werden das Toluol und flüchtige Komponenten bei 50 °C und einem Druck von 15 mbar entfernt. Eine nachfolgende Destillation liefert 66 g des gewünschten Produkts mit folgenden Daten:

| | |
|---|---|
| Siedepunkt: | 73 °C/0,1 mbar; |
| Brechungsindex $n_D^{20}$ : | 1,4292; |
| SiH-Gehalt: | 0,402 mol/100 g; |
| Epoxid-Wert: | 0,395 mol/100 g. |

Beispiel 2:

Herstellung einer Organosiliciumverbindung der Struktur

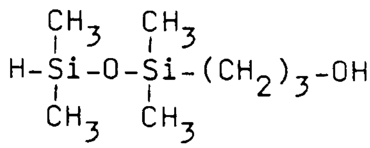

In einen mit Rückflußkühler, Rührer, Innenthermometer und Tropftrichter versehenen 1000 ml-Rundkolben werden 67,1 g 1.1.3.3-Tetramethyldisiloxan (0,5 mol), 100 ml Toluol und - als Katalysator - 2 g eines mit 1 % Platin belegten Aluminiumoxids gegeben. Dazu wird bei 60 °C unter Rühren innerhalb von 4 h eine Mischung von 29 g Allylalkohol (0,5 mol) und 100 ml Toluol getropft. Nach 1stündigem Rühren bei 60 °C und anschließendem Abkühlen auf Raumtemperatur wird der Katalysator durch Druckfiltration über ein Membranfilter mit einer Porenweite von 0,45 µm abgetrennt. Das Toluol und flüchtige Bestandteile werden dann bei 50 °C und einem Druck von 15 mbar entfernt. Eine nachfolgende Destillation liefert 32,7 g des gewünschten Produkts mit folgenden Daten:

| | |
|---|---|
| Siedepunkt:<br>Brechungsindex $n_D^{20}$ :<br>SiH-Gehalt: | 50 bis 54 °C/0,2 mbar;<br>1,4190;<br>0,540 mol/100 g. |

Beispiel 3:

Herstellung einer Organosiliciumverbindung der Struktur

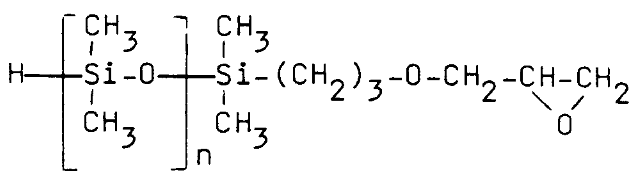

(n = 7 bis 8 )

In einen mit Rückflußkühler, Rührer, Innenthermometer und Tropftrichter versehenen 1000 ml-Rundkolben werden 129 g eines α,ω-SiH-funktionellen Polydimethylsiloxans (0,2 mol) mit einem SiH-Gehalt von 0,31 mol/100 g, 500 ml Toluol und 2 ml einer 0,01 molaren Lösung von Hexachloroplatinsäure in Tetrahydrofuran gegeben. Dazu wird bei 95 °C unter Rühren innerhalb von 10 h eine Mischung von 22,8 g Allylglycidylether (0,2 mol) und 100 ml Toluol getropft. Nach 14stündigem Kochen am Rückfluß wird das Toluol bei 50 °C und einem Druck von 15 mbar entfernt. Sonstige flüchtige Komponenten werden durch 2stündiges Erhitzen auf 70 °C bei einem Druck von 0,06 mbar entfernt. Es werden 123,5 g des gewünschten Produkts mit folgenden Daten erhalten:

| | |
|---|---|
| Brechungsindex $n_D^{20}$ :<br>SiH-Gehalt:<br>Epoxid-Wert: | 1,4139;<br>0,129 mol/100 g;<br>0,114 mol/100 g. |

Beispiel 4:

Herstellung einer Organosiliciumverbindung der Struktur

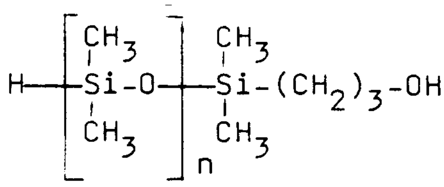

(n = 7 bis 8)

In der in Beispiel 2 beschriebenen Weise werden 161,3 g eines α,ω-SiH-funktionellen Polydimethylsiloxans (0,25 mol) mit einem SiH-Gehalt von 0,31 mol/100 g und 14,5 g Allylalkohol (0,25 mol) zur Reaktion gebracht. Dann wird das Toluol bei 50 °C und einem Druck von 15 mbar entfernt. Sonstige flüchtige Komponenten werden durch Erhitzen auf 50 °C bei einem Druck von 0,06 mbar entfernt. Es werden 134 g des gewünschten Produkts mit folgenden Daten erhalten:

| | |
|---|---|
| Brechungsindex $n_D^{20}$ : | 1,4042; |
| SiH-Gehalt: | 0,142 mol/100 g. |

Beispiel 5:

Herstellung einer epoxyfunktionellen isocyanurathaltigen Organosiliciumverbindung (1a) der Struktur

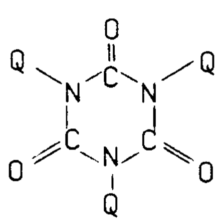

; Q =

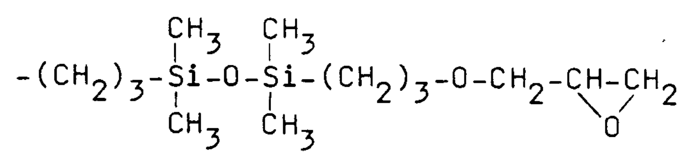

In einen mit Rückflußkühler, Rührer, Innenthermometer und Tropftrichter versehenen 500 ml-Rundkolben werden 50 g Triallylisocyanurat (0,2 mol), 50 ml Toluol und 6 ml einer 0,01 molaren Lösung von Hexachloroplatinsäure in Tetrahydrofuran gegeben. Dazu wird bei 95 °C unter Rühren innerhalb von 2 h eine Mischung von 149 g der nach Beispiel 1 hergestellten Organosiliciumverbindung (0,6 mol) und 100 ml Toluol getropft. Nach 4stündigem Kochen am Rückfluß wird das Toluol bei 50 °C und einem Druck von 15 mbar entfernt. Sonstige flüchtige Komponenten werden durch Erhitzen auf 100 °C bei einem Druck von 0,06 mbar entfernt. Als Rückstand werden 183 g des gewünschten Produkts mit folgenden Daten erhalten:

| | |
|---|---|
| Viskosität bei 25 °C: | 220 mPa.s; |
| Brechungsindex $n_D^{20}$ : | 1,4710; |
| Epoxid-Wert: | 0,299 mol/100 g. |

Beispiel 6:

Herstellung einer acrylatfunktionellen isocyanurathaltigen Organosiliciumverbindung (5a) der Struktur

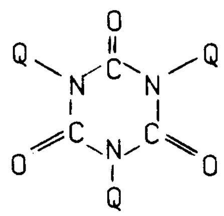

;

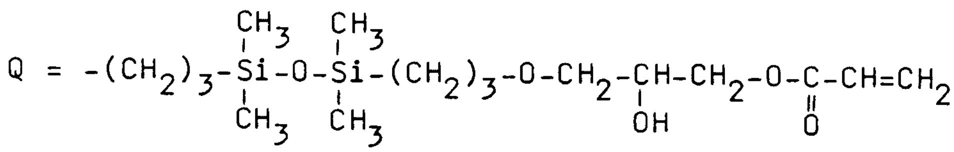

In einen mit Rückflußkühler, Rührer, Innenthermometer und Tropftrichter versehenen 500 ml-Rundkolben werden 99,4 g der nach Beispiel 5 hergestellten epoxyfunktionellen isocyanurathaltigen Organosiliciumverbindung (0,1 mol), 100 ml Toluol und 0,81 g N.N-Dimethylbenzylamin gegeben. Dazu wird bei 100 °C unter Rühren innerhalb von 30 min eine Mischung von 32,4 g Acrylsäure (0,45 mol) und 50 ml Toluol getropft. Die erhaltene Lösung wird noch 19 h auf 100 °C erwärmt, dann wird das Toluol bei 50 °C und einem Druck von 15 mbar entfernt. Nach der Zugabe von 10 mg Phenothiazin werden Lösungsmittelreste und nicht umgesetzte Acrylsäure durch Erhitzen auf 70 °C bei einem Druck von 0,06 mbar entfernt. Als Rückstand werden 97 g des gewünschten Produkts mit folgenden Daten erhalten:

| | |
|---|---|
| Viskosität bei 25 °C: | 2500 mPa.s; |
| Brechungsindex $n_D^{20}$ : | 1,4790; |
| Acrylatgehalt: | 0,252 mol/100 g. |

Beispiel 7:

Herstellung einer hydroxyfunktionellen isocyanurathaltigen Organosiliciumverbindung (2a) der Struktur

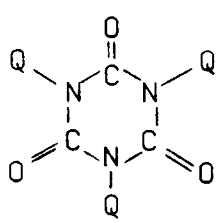

;

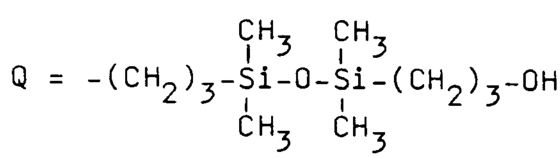

In einen mit Rückflußkühler, Rührer, Innenthermometer und Tropftrichter versehenen 1000 ml-Rundkolben werden 25 g Triallylisocyanurat (0,1 mol), 100 ml Toluol und 0,3 ml eines Platin/Divinyltetramethyldisiloxan-Komplexes (Lösung in Xylol mit 3 bis 3,5 % Platin, berechnet als Element) gegeben. Dazu wird bei 60 °C unter Rühren innerhalb von 15 h eine Mischung von 57,7 g des nach Beispiel 2 hergestellten 1-(3-Hydroxypropyl)-1.1.3.3-tetramethyldisiloxans (0,3 mol) und 250 ml Toluol getropft und anschließend 2 h bei 60 °C gerührt. Nach Entfernen des Toluols bei 50 °C und einem Druck von 15 mbar werden 79,6 g einer viskosen Flüssigkeit, deren Struktur durch Kernresonanz- und Infrarotabsorptionsspektren bestätigt wird, mit folgenden Daten erhalten:

| | |
|---|---|
| Viskosität bei 25 °C: <br> Brechungsindex $n_D^{20}$ : | 1600 mPa.s; <br> 1,4738. |

Beispiel 8:

Herstellung einer acrylatfunktionellen isocyanurathaltigen Organosiliciumverbindung (3a) der Struktur

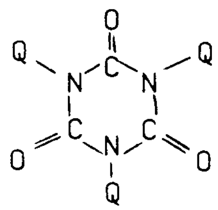

,

mit Q =

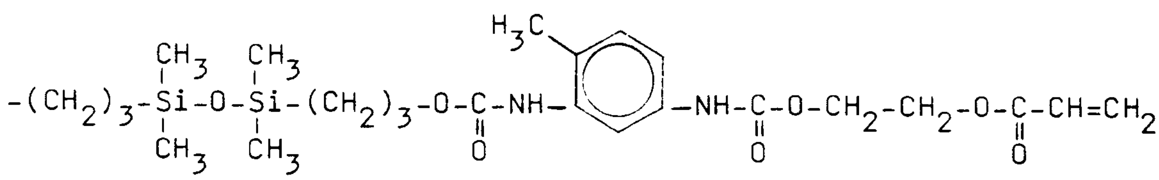

In einen mit Rührer, Innenthermometer und Tropftrichter versehenen 1000 ml-Rundkolben werden 50 g der nach Beispiel 7 hergestellten hydroxyfunktionellen isocyanurathaltigen Organosiliciumverbindung (0,06 mol), 250 ml Toluol, 0,01 g Phenothiazin und 0,2 ml Dibutylzinndilaurat gegeben. Dazu wird eine Lösung von 52,3 g eines isocyanatfunktionellen Acrylats (0,18 mol) in 250 ml Toluol in der Weise zugetropft, daß die Temperatur der Reaktionsmischung 20 °C nicht übersteigt. Das isocyanatfunktionelle Acrylat wurde durch Umsetzung von 1 mol 2.4-Toluylendiisocyanat mit 1 mol Acrylsäure-2-hydroxyethylester hergestellt (Schmelzpunkt: 42 °C). Nach 20stündigem Rühren bei 20 °C werden feste Bestandteile durch Druckfiltration über ein Membranfilter mit einer Porenweite von 0,45 µm abgetrennt. Nach Entfernen des Toluols bei 50 °C und einem Druck von 15 mbar werden 72 g eines hochviskosen Harzes mit folgenden Daten erhalten:

| | |
|---|---|
| Viskosität bei 25 °C: <br> Brechungsindex $n_D^{20}$ : <br> Acrylatgehalt: | 250000 mPa.s; <br> 1,5198; <br> 0,155 mol/100 g. |

Beispiel 9:

Herstellung einer epoxyfunktionellen isocyanurathaltigen Organosiliciumverbindung (1b) der Struktur

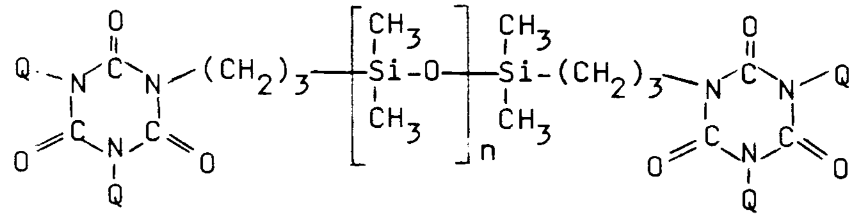

;

Q = 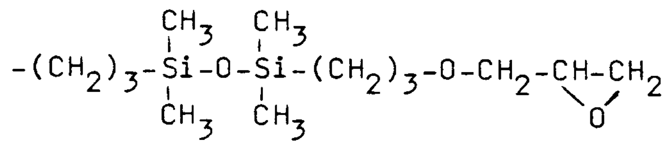

,

n = 7 bis 8

In einen mit Rückflußkühler, Rührer, Innenthermometer und Tropftrichter versehenen 1000 ml-Rundkolben werden 50 g Triallylisocyanurat (0,2 mol), 100 ml Toluol und 0,5 ml eines Platin/Divinyltetramethyldisiloxan-Komplexes (Lösung in Xylol mit 3 bis 3,5 % Platin, berechnet als Element) gegeben. Dazu wird bei 100 °C unter Rühren innerhalb von 3 h eine Mischung von 64,5 g eines $\alpha,\omega$-SiH-funktionellen Polydimethylsiloxans (0,1 mol) mit einem SiH-Gehalt von 0,31 mol/100 g und 100 ml Toluol getropft. Die Reaktion ist nach 2 h bei 100 °C beendet, wie das Verschwinden der SiH-Bande im Infrarotspektrum bei 2120 $cm^{-1}$ zeigt. Anschließend wird bei 100 °C unter Rühren innerhalb von 2 h eine Mischung von 99,3 g der nach Beispiel 1 hergestellten Organosiliciumverbindung (0,4 mol) und 100 ml Toluol zugetropft. Nach 5 h bei 100 °C ist die Reaktion beendet. Die Aufarbeitung erfolgt wie in Beispiel 5 beschrieben. Als Rückstand werden 186 g des gewünschten Produkts mit folgenden Daten erhalten:

| | |
|---|---|
| Viskosität bei 25 °C: | 1000 mPa.s; |
| Brechungsindex $n_D^{20}$ : | 1,4602; |
| Epoxid-Wert: | 0,182 mol/100 g. |

Beispiel 10:

Herstellung einer epoxyfunktionellen isocyanurathaltigen Organosiliciumverbindung (1b) der Struktur

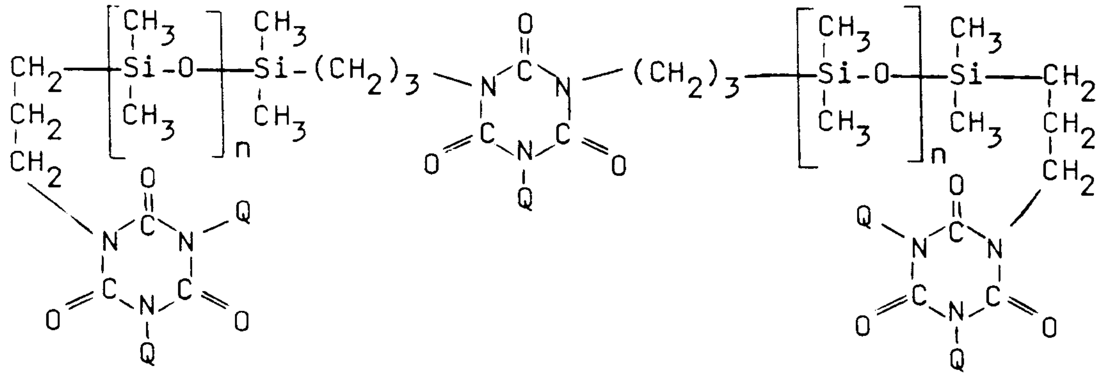

;

Q =

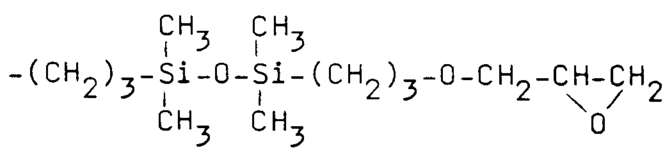

,

n = 7 bis 8

Entsprechend Beispiel 9 werden 37,4 g Triallylisocyanurat (0,15 mol) mit 64,5 g eines $\alpha,\omega$-SiH-funktionellen Polydimethylsiloxans (0,1 mol) mit einem SiH-Gehalt von 0,31 mol/100 g zur Reaktion gebracht. Das Reaktionsprodukt wird anschließend mit 62,1 g der nach Beispiel 1 hergestellten Organosiliciumverbindung (0,25 mol) umgesetzt, und dann wird aufgearbeitet. Es werden 136 g des gewünschten Produkts mit folgenden Daten erhalten:

| | |
|---|---|
| Viskosität bei 25 °C: | 800 mPa.s; |
| Brechungsindex $n_D^{20}$ : | 1,4574; |
| Epoxid-Wert: | 0,141 mol/100 g. |

**Patentansprüche**

**1.** Isocyanurathaltige Organosiliciumverbindungen der allgemeinen Formel

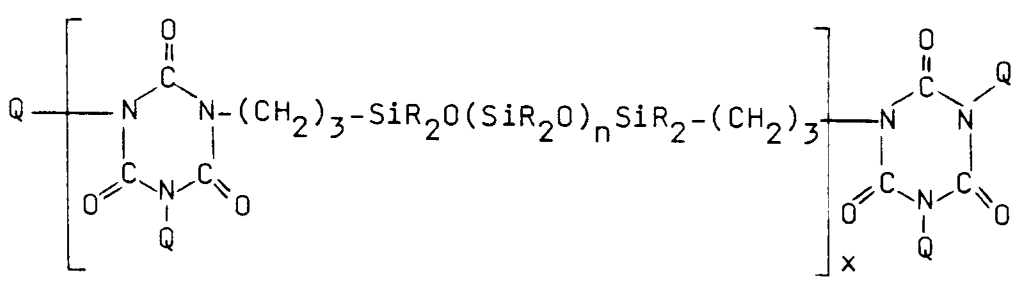

,

worin Q = $-(CH_2)_3SiR_2O(SiR_2O)_nSiR_2R'$, n eine ganze Zahl von 0 bis 25 und x eine ganze Zahl von 0 bis 10 ist und für die Reste R und R', die jeweils gleich oder verschieden sein können, folgendes gilt:

R = Alkyl, Cycloalkyl, Aryl, Aralkyl oder Alkaryl, und

R' = ein epoxyfunktioneller Rest mit 4 bis 10 C-Atomen oder ein (meth)acrylatfunktioneller Rest mit mindestens 6 C-Atomen.

2. Isocyanurathaltige Organosiliciumverbindungen nach Anspruch 1, **dadurch gekennzeichnet,** daß der epoxyfunktionelle Rest folgende Struktur aufweist:

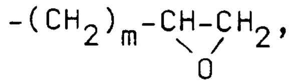 , 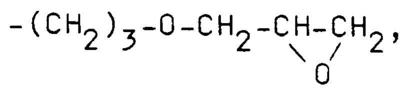 ,

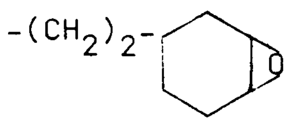 , 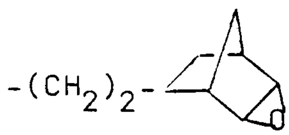 , 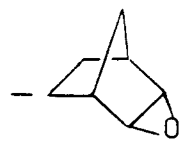 ,

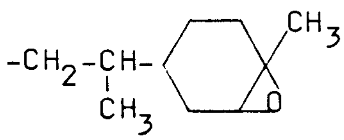 oder 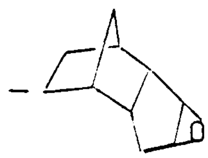 ,

wobei folgendes gilt: m = 2 bis 6.

3. Isocyanurathaltige Organosiliciumverbindungen nach Anspruch 1 oder 2, **dadurch gekennzeichnet,** daß der (meth)acrylatfunktionelle Rest folgende Struktur aufweist:

$-(CH_2)_m-X$ ,

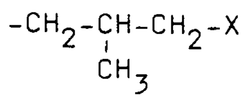 , 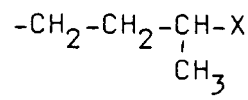 ,

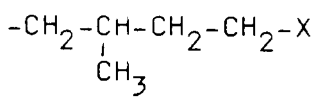 , 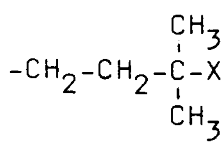 oder 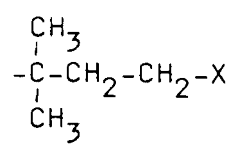 ,

wobei folgendes gilt: m = 3 oder 4 und X =

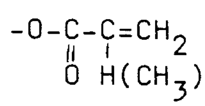 .

4. Verfahren zur Herstellung isocyanurathaltiger Organosiliciumverbindungen gemäß einem der Ansprüche 1 bis 3, **dadurch gekennzeichnet,** daß

a) ein ungesättigtes Epoxid mit 4 bis 10 Kohlenstoffatomen mit einer Organosiliciumverbindung der allgemeinen Formel

$HSiR_2O(SiR_2O)_nSiR_2H$ ,

worin R und n die vorstehend angegebene Bedeutung haben, in der Weise einer Hydrosilylierungsreaktion zu einer epoxyfunktionellen Organosiliciumverbindung unterworfen wird, daß das Reaktionsprodukt im Mittel eine Si-H-Funktion aufweist, und daß

b) Triallyl-1.3.5-triazin-2.4.6-trion mit der epoxyfunktionellen Organosiliciumverbindung in einer Menge zu einer epoxyfunktionellen isocyanurathaltigen Organosiliciumverbindung hydrosilyliert wird, daß auf die Allylfunktionen mindestens äquimolare Mengen an Si-H-Funktionen entfallen.

**5.** Verfahren zur Herstellung isocyanurathaltiger Organosiliciumverbindungen gemäß einem der Ansprüche 1 bis 3, **dadurch gekennzeichnet,** daß

a) Triallyl-1.3.5-triazin-2.4.6-trion mit einer Organosiliciumverbindung der allgemeinen Formel

$HSiR_2O(SiR_2O)_nSiR_2H$ ,

worin R und n die vorstehend angegebene Bedeutung haben, im Molverhältnis von 1,1:1 bis 2:1 zu einer allylfunktionellen isocyanurathaltigen Organosiliciumverbindung umgesetzt wird, daß

b) ein ungesättigtes Epoxid mit 4 bis 10 Kohlenstoffatomen mit einer Organosiliciumverbindung der allgemeinen Formel

$HSiR_2O(SiR_2O)_nSiR_2H$ ,

worin R und n die vorstehend angegebene Bedeutung haben, in der Weise einer Hydrosilylierungsreaktion zu einer epoxyfunktionellen Organosiliciumverbindung unterworfen wird, daß das Reaktionsprodukt im Mittel eine Si-H-Funktion aufweist, und daß

c) die allylfunktionelle isocyanurathaltige Organosiliciumverbindung mit der epoxyfunktionellen Organosiliciumverbindung in einer Menge zu einer epoxyfunktionellen isocyanurathaltigen Organosiliciumverbindung hydrosilyliert wird, daß auf die Allylfunktionen mindestens äquimolare Mengen an Si-H-Funktionen entfallen.

**6.** Verfahren nach Anspruch 4 oder 5, **dadurch gekennzeichnet,** daß die epoxyfunktionelle isocyanurathaltige Organosiliciumverbindung in der Weise mit (Meth)acrylsäure zur Reaktion gebracht wird, daß die Epoxidfunktionen ganz oder teilweise in (Meth)acrylatfunktionen übergeführt werden.

**7.** Verfahren zur Herstellung isocyanurathaltiger Organosiliciumverbindungen gemäß einem der Ansprüche 1 bis 3, **dadurch gekennzeichnet,** daß

a) ein ungesättigter Alkohol mit 3 bis 5 Kohlenstoffatomen mit einer Organosiliciumverbindung der allgemeinen Formel

$HSiR_2O(SiR_2O)_nSiR_2H$ ,

worin R und n die vorstehend angegebene Bedeutung haben, in der Weise einer Hydrosilylierungsreaktion zu einer hydroxyfunktionellen Organosiliciumverbindung unterworfen wird, daß das Reaktionsprodukt im Mittel eine Si-H-Funktion aufweist, daß

b) Triallyl-1.3.5-triazin-2.4.6-trion mit der hydroxyfunktionellen Organosiliciumverbindung in einer Menge zu einer hydroxyfunktionellen isocyanurathaltigen Organosiliciumverbindung hydrosilyliert wird, daß auf die Allylfunktionen mindestens äquimolare Mengen an Si-H-Funktionen entfallen, und daß

c) die hydroxyfunktionelle isocyanurathaltige Organosiliciumverbindung in der Weise mit Epichlorhydrin oder einem monofunktionellen (Meth)acrylsäurederivat zur Reaktion gebracht wird, daß die Hydroxylgruppen wenigstens teilweise umgesetzt werden.

**8.** Verfahren zur Herstellung isocyanurathaltiger Organosiliciumverbindungen gemäß einem der Ansprüche 1 bis 3, **dadurch gekennzeichnet,** daß

a) Triallyl-1.3.5-triazin-2.4.6-trion mit einer Organosiliciumverbindung der allgemeinen Formel

$HSiR_2O(SiR_2O)_nSiR_2H$ ,

worin R und n die vorstehend angegebene Bedeutung haben, im Molverhältnis von 1,1:1 bis 2:1 zu einer allylfunktionellen isocyanurathaltigen Organosiliciumverbindung umgesetzt wird, daß

b) ein ungesättigter Alkohol mit 3 bis 5 Kohlenstoffatomen mit einer Organosiliciumverbindung der allgemeinen Formel

$HSiR_2O(SiR_2O)_nSiR_2H$ ,

worin R und n die vorstehend angegebene Bedeutung haben, in der Weise einer Hydrosilylierungsreaktion zu einer hydroxyfunktionellen Organosiliciumverbindung unterworfen wird, daß das Reaktionsprodukt im Mittel eine Si-H-Funktion aufweist, daß

c) die allylfunktionelle isocyanurathaltige Organosiliciumverbindung mit der hydroxyfunktionellen Organosiliciumverbindung in einer Menge zu einer hydroxyfunktionellen isocyanurathaltigen Organosiliciumverbindung hydrosilyliert wird, daß auf die Allylfunktionen mindestens äquimolare Mengen an Si-H-Funktionen entfallen, und daß

d) die hydroxyfunktionelle isocyanurathaltige Organosiliciumverbindung in der Weise mit Epichlorhydrin oder einem monofunktionellen (Meth)acrylsäurederivat zur Reaktion gebracht wird, daß die Hydroxylgruppen wenigstens teilweise umgesetzt werden.

**9.** Verfahren nach Anspruch 7 oder 8, **dadurch gekennzeichnet,** daß als monofunktionelles (Meth)-acrylsäurederivat (Meth)acrylsäurechlorid, ein (Meth)acrylsäureester, ein Chlorkohlensäureester eines hydroxyfunktionellen (Meth)acrylats oder ein isocyanatfunktionelles (Meth)acrylat verwendet wird.

**10.** Verfahren nach Anspruch 9, **dadurch gekennzeichnet,** daß als isocyanatfunktionelles (Meth)acrylat ein Addukt eines hydroxyfunktionellen (Meth)acrylats an ein Diisocyanat verwendet wird, wobei das Addukt im Mittel je eine Isocyanat- und (Meth)acrylatfunktion aufweist.

## Claims

**1.** Isocyanurate-containing organosilicon compounds of the general formula

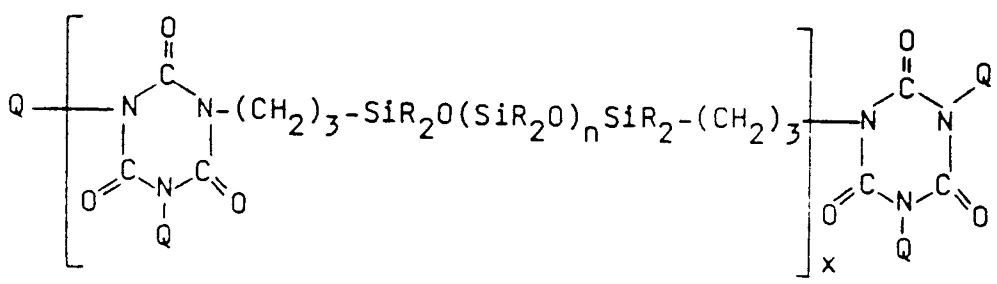

,

where Q = $-(CH_2)_3SiR_2O(SiR_2O)_nSiR_2R'$, n is an integer from 0 to 25 and x is an integer from 0 to 10 and where with respect to the residues R and R', which may be the same or different, the following holds:

R = alkyl, cycloalkyl, aryl, aralkyl or alkylaryl, and

R' = an epoxy-functional residue with 4 to 10 C atoms or a (meth)acrylate-functional residue with at least 6 C atoms.

**2.** Isocyanurate-containing organosilicon compounds according to Claim 1, characterised in that the epoxy-functional residue exhibits the following structure:

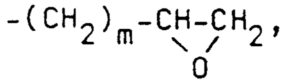 , 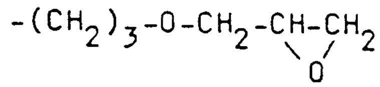 ,

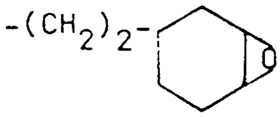 , 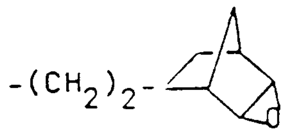 , 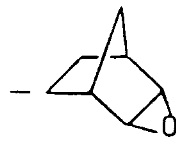 ,

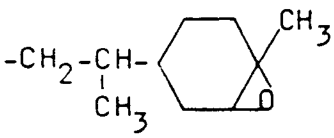 or 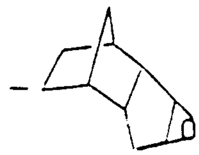 ,

where the following holds: m = 2 to 6.

3. Isocyanurate-containing organosilicon compounds according to Claim 1 or 2, characterised in that the (meth)acrylate-functional residue exhibits the following structure:

$-(CH_2)_m-X$ ,

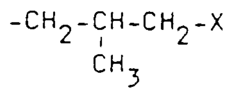 , 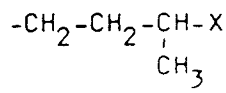 ,

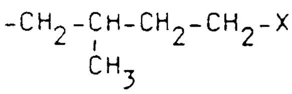 , 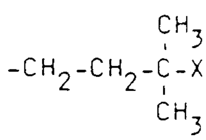 or 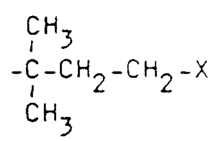 ,

where the following holds: m = 3 or 4 and X =

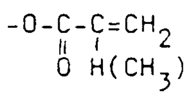 .

4. Process for producing isocyanurate-containing organosilicon compounds according to one of Claims 1 to 3, characterised in that

a) an unsaturated epoxide with 4 to 10 carbon atoms is subjected to a hydrosilylation reaction with an organosilicon compound of the general formula

$HSiR_2O(SiR_2O)_nSiR_2H$ ,

where R and n have the meaning specified above, to form an epoxy-functional organosilicon compound in such a way that the reaction product exhibits on average one Si-H function,

and

b) triallyl-1,3,5-triazine-2,4,6-trione is hydrosilylated in such a quantity with the epoxy-functional organosilicon compound to form an epoxy-functional isocyanurate-containing organosilicon compound that at least equimolar quantities of Si-H functions are apportioned to the allyl functions.

**5.** Process for producing isocyanurate-containing organosilicon compounds according to one of Claims 1 to 3, characterised in that
a) triallyl-1,3,5-triazine-2,4,6-trione is reacted with an organosilicon compound of the general formula

$HSiR_2O(SiR_2O)_nSiR_2H$ ,

where R and n have the meaning specified above, in a molar ratio between 1.1:1 and 2:1 to form an allyl-functional isocyanurate-containing organosilicon compound,
b) an unsaturated epoxide with 4 to 10 carbon atoms is subjected to a hydrosilylation reaction with an organosilicon compound of the general formula

$HSiR_2O(SiR_2O)_nSiR_2H$ ,

where R and n have the meaning specified above, to form an epoxy-functional organosilicon compound in such way that the reaction product exhibits on average one Si-H function,
and
c) the allyl-functional isocyanurate-containing organosilicon compound is hydrosilylated in such a quantity with the epoxy-functional organosilicon compound to form an epoxy-functional isocyanurate-containing organosilicon compound that at least equimolar quantities of Si-H functions are apportioned to the allyl functions.

**6.** Process according to Claim 4 or 5, characterised in that the epoxy-functional isocyanurate-containing organosilicon compound is caused to react with (meth)acrylic acid in such a way that the epoxide functions are wholly or partially converted into (meth)acrylate functions.

**7.** Process for producing isocyanurate-containing organosilicon compounds according to one of Claims 1 to 3, characterised in that
a) an unsaturated alcohol with 3 to 5 carbon atoms is subjected to a hydrosilylation reaction with an organosilicon compound of the general formula

$HSiR_2O(SiR_2O)_nSiR_2H$ ,

where R and n have the meaning specified above, to form a hydroxy-functional organosilicon compound in such way that the reaction product exhibits on average one Si-H function,
and
b) triallyl-1,3,5-triazine-2,4,6-trione is hydrosilylated in such a quantity with the hydroxy-functional organosilicon compound to form a hydroxy-functional isocyanurate-containing organosilicon compound that at least equimolar quantities of Si-H functions are apportioned to the allyl functions, and
c) the hydroxy-functional isocyanurate-containing organosilicon compound is caused to react with epichlorohydrin or a monofunctional (meth)acrylic acid derivative in such a way that the hydroxyl groups are at least partially reacted.

**8.** Process for producing isocyanurate-containing organosilicon compounds according to one of Claims 1 to 3, characterised in that
a) triallyl-1,3,5-triazine-2,4,6-trione is reacted with an organosilicon compound of the general formula

$HSiR_2O(SiR_2O)_nSiR_2H$ ,

where R and n have the meaning specified above, in a molar ratio between 1.1:1 and 2:1 to form an allyl-functional isocyanurate-containing organosilicon compound,
b) an unsaturated alcohol with 3 to 5 carbon atoms is subjected to a hydrosilylation reaction with an organosilicon compound of the general formula

$HSiR_2O(SiR_2O)_nSiR_2H$ ,

where R and n have the meaning specified above, to form a hydroxy-functional organosilicon

compound in such a way that the reaction product exhibits on average one Si-H function,
c) the allyl-functional isocyanurate-containing organosilicon compound is hydrosilylated with the hydroxy-functional organosilicon compound in such a quantity to form a hydroxy-functional isocyanurate-containing organosilicon compound that at least equimolar quantities of Si-H functions are apportioned to the allyl functions, and
d) the hydroxy-functional isocyanurate-containing organosilicon compound is caused to react with epichlorohydrin or a monofunctional (meth)acrylic acid derivative in such a way that the hydroxyl groups are at least partially reacted.

**9.** Process according to Claim 7 or 8, characterised in that, by way of monofunctional (meth)acrylic acid derivative, use is made of (meth)acrylic acid chloride, a (meth)acrylic acid ester, a chlorocarbonate of a hydroxy-functional (meth)acrylate or an isocyanate-functional (meth)acrylate.

**10.** Process according to Claims 9, characterised in that, by way of isocyanate-functional (meth)acrylate, use is made of an adduct of a hydroxy-functional (meth)acrylate on a diisocyanate, whereby the adduct exhibits on average one isocyanate function and one (meth)acrylate function.

## Revendications

**1.** Composés d'organosilicium contenant des groupes isocyanurate, répondant à la formule générale:

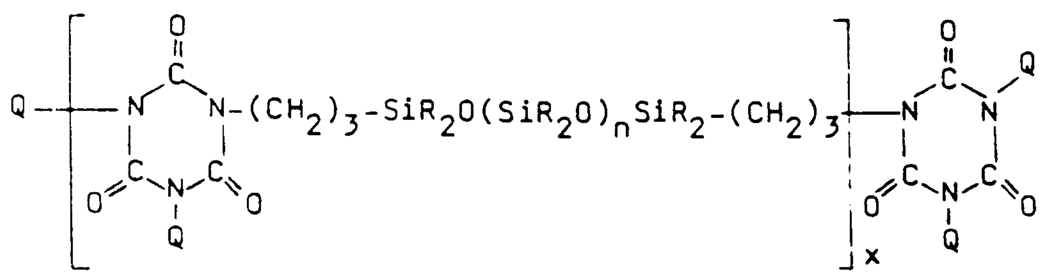

dans laquelle Q = $-(CH_2)_3SiR_2O(SiR_2O)_nSiR_2R'$, n représente un entier de 0 à 25 et x représente un entier de 0 à 10, les significations ci-après étant valables pour les radicaux R et R' qui peuvent être chacun identiques ou différents :

R = un groupe alkyle, un groupe cycloalkyle, un groupe aryle, un groupe aralkyle ou un groupe alkaryle, et

R' = un radical époxy-fonctionnel contenant de 4 à 10 atomes de carbone, ou encore un radical (méth)acrylate-fonctionnel contenant au moins 6 atomes de carbone.

**2.** Composés d'organosilicium contenant des groupes isocyanurate selon la revendication 1, caractérisés en ce que le radical époxy-fonctionnel présente la structure ci-après :

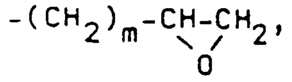 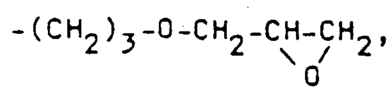

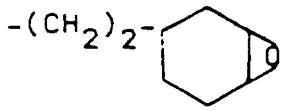 , 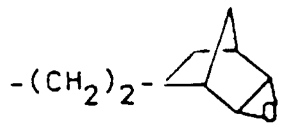 , 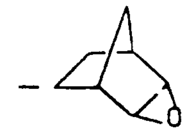

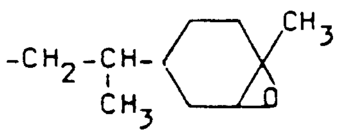

ou 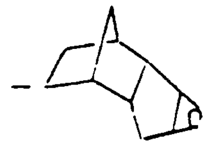

dans laquelle m = 2 à 6.

**3.** Composés d'organosilicium contenant des groupes isocyanurate selon la revendication 1 ou 2, caractérisés en ce que le radical (méth)acrylate-fonctionnel présente la structure ci-après :

$-(CH_2)_m-X$ ,

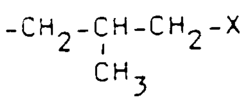 , 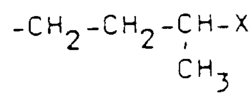 ,

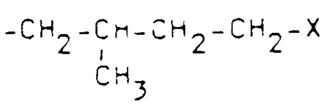 , 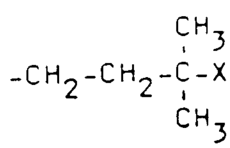 ou 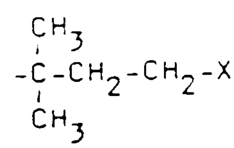 ,

dans laquelle m = 3 ou 4 et X =

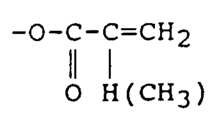

**4.** Procédé pour la préparation de composés d'organosilicium contenant des groupes isocyanurate, selon l'une quelconque des revendications 1 à 3, caractérisé en ce que

a) on soumet à une réaction d'hydrosilylation un époxyde insaturé contenant de 4 à 10 atomes de carbone avec un composé d'organosilicium répondant à la formule générale:

$HSiR_2O(SiR_2O)_nSiR_2H$

dans laquelle R et n ont la signification indiquée antérieurement, pour obtenir un composé d'organosilicium époxy-fonctionnel, de telle sorte que le produit réactionnel présente, en moyenne, une fonction Si-H, et en ce que

b) on soumet à une hydrosilylation la triallyl-1,3,5-triazine-2,4,6-trione avec le composé d'organosilicium époxy-fonctionnel pour obtenir un composé d'organosilicium époxy-fonctionnel contenant des groupes isocyanurate, en une quantité telle que l'on ait des quantités au moins équimolaires de fonctions Si-H rapportées aux fonctions allyle.

**5.** Procédé pour la préparation de composés d'organosilicium contenant des groupes isocyanurate, selon l'une quelconque des revendications 1 à 3, caractérisé en ce que

a) on fait réagir la triallyl-1,3,5-triazine-2,4,6-trione avec un composé d'organosilicium répondant à la formule générale:

$HSiR_2O(SiR_2O)_nSiR_2H$

dans laquelle R et n ont la signification indiquée antérieurement, dans un rapport molaire de 1,1:1 à 2:1 pour obtenir un composé d'organosilicium allyl-fonctionnel contenant des groupes isocyanurate, en ce que

b) on soumet à une réaction d'hydrosilylation un époxyde insaturé contenant de 4 à 10 atomes de carbone avec un composé d'organosilicium répondant à la formule générale :

$HSiR_2O(SiR_2O)_nSiR_2H$

dans laquelle R et n ont la signification indiquée antérieurement, pour obtenir un composé d'organosilicium époxy-fonctionnel, de telle sorte que le produit réactionnel présente, en moyenne, une fonction Si-H, et en ce que

c) on soumet à une hydrosilylation le composé d'organosilicium allyl-fonctionnel contenant des groupes isocyanurate avec le composé d'organosilicium époxy-fonctionnel pour obtenir un composé d'organosilicium époxy-fonctionnel contenant des groupes isocyanurate, en une quantité telle que l'on ait des quantités au moins équimolaires de fonctions Si-H rapportées aux fonctions allyle.

**6.** Procédé selon la revendication 4 ou 5, caractérisé en ce qu'on amène le composé d'organosilicium époxy-fonctionnel contenant des groupes isocyanurate à réagir avec l'acide (méth)acrylique de telle sorte que les fonctions époxyde soient transformées, en tout ou en partie, en fonctions (méth)acrylate.

**7.** Procédé pour la préparation de composés d'organosilicium contenant des groupes isocyanurate, selon l'une quelconque des revendications 1 à 3, caractérisé en ce que

a) on soumet à une réaction d'hydrosilylation un alcool insaturé contenant de 3 à 5 atomes de carbone avec un composé d'organosilicium répondant à la formule générale:

$HSiR_2O(SiR_2O)_nSiR_2H$

dans laquelle R et n ont la signification indiquée antérieurement, pour obtenir un composé d'organosilicium hydroxy-fonctionnel, de telle sorte que le produit réactionnel présente, en moyenne, une fonction Si-H, en ce que

b) on soumet à une hydrosilylation la triallyl-1,3,5-triazine-2,4,6-trione avec le composé d'organosilicium hydroxy-fonctionnel pour obtenir un composé d'organosilicium hydroxy-fonctionnel contenant des groupes isocyanurate, en une quantité telle que l'on ait des quantités au moins équimolaires de fonctions Si-H rapportées aux fonctions allyle, et en ce que

c) on amène à réagir le composé d'organosilicium hydroxy-fonctionnel contenant des groupes isocyanurate avec de l'épichlorhydrine ou un dérivé monofonctionnel d'acide (méth)acrylique de telle sorte que les groupes hydroxyle soient transformés au moins en partie.

**8.** Procédé pour la préparation de composés d'organosilicium contenant des groupes isocyanurate selon l'une quelconque des revendications 1 à 3, caractérisé en ce que

a) on fait réagir la triallyl-1,3,5-triazine-2,4,6-trione avec un composé d'organosilicium répondant à la formule générale:

$HSiR_2O(SiR_2O)_nSiR_2H$

dans laquelle R et n ont la signification indiquée antérieurement, dans un rapport molaire de 1,1:1 à

2:1 pour obtenir un composé d'organosilicium allyl-fonctionnel contenant des groupes isocyanurate, en ce que
b) on soumet à une réaction d'hydrosilylation un alcool insaturé contenant de 3 à 5 atomes de carbone avec un composé d'organosilicium répondant à la formule générale :

$HSiR_2O(SiR_2O)_nSiR_2H$

dans laquelle R et n ont la signification indiquée antérieurement, pour obtenir un composé d'organosilicium hydroxy-fonctionnel, de telle sorte que le produit réactionnel présente, en moyenne, une fonction Si-H, et en ce que
c) on soumet à une hydrosilylation le composé d'organosilicium allyl-fonctionnel contenant des groupes isocyanurate avec le composé d'organosilicium hydroxy-fonctionnel pour obtenir un composé d'organosilicium hydroxy-fonctionnel contenant des groupes isocyanurate, en une quantité telle que l'on ait des quantités au moins équimolaires de fonctions Si-H rapportées aux fonctions allyle, et en ce que
d) on amène à réagir le composé d'organosilicium hydroxy-fonctionnel contenant des groupes isocyanurate avec de l'épichlorhydrine ou un dérivé monofonctionnel d'acide (méth)acrylique de telle sorte que les groupes hydroxyle soient transformés au moins en partie.

**9.** Procédé selon la revendication 7 ou 8, caractérisé en ce que, à titre de dérivé monofonctionnel d'acide (méth)acrylique, on utilise le chlorure d'acide (méth)acrylique, un ester d'acide (méth)acrylique, un ester d'acide chlorocarbonique d'un (méth)acrylate hydroxy-fonctionnel ou encore un (méth)acrylate isocyanate-fonctionnel.

**10.** Procédé selon la revendication 9, caractérisé en ce que, à titre de (méth)acrylate isocyanate-fonctionnel, on utilise un produit d'addition d'un (méth)acrylate hydroxy-fonctionnel à un diisocyanate, le produit d'addition présentant, en moyenne, respectivement une fonction isocyanate et (méth)acrylate.